Europäisches Patentamt

European Patent Office

Office européen des brevets

(11) Numéro de publication: **0 368 394**

**A1**

## (12) DEMANDE DE BREVET EUROPEEN

(21) Numéro de dépôt: 89202753.3

(22) Date de dépôt: 31.10.89

(51) Int. Cl.5: **B23H 7/30, B23H 11/00**

(30) Priorité: 08.11.88 CH 4142/88

(43) Date de publication de la demande:
16.05.90 Bulletin 90/20

(84) Etats contractants désignés:
DE FR GB

(71) Demandeur: CHARMILLES TECHNOLOGIES
S.A.
8-10, rue du Pré-de-la-Fontaine Zone
industrielle de Satigny
CH-1217 Meyrin 1(CH)

(72) Inventeur: Bouchoud, Marcel
29, rue Daubin
CH-1203 Geneve(CH)

(74) Mandataire: Hugelin, Christiane
c/o CHARMILLES TECHNOLOGIES SA Case
postale 373
CH-1217 Meyrin 1(CH)

(54) **Dispositif pour limiter le retrait de l'électrode-outil d'une machine d'usinage et son utilisation en enfonçage par électro-érosion.**

(57) Un dispositif comporte un élément monté sur le bâti 1 et présentant un micro-interrupteur 8 actionnable par un organe mécanique 9, et coupant le courant d'usinage lorsque cet organe 9 arrive en regard avec lui lors de la remontée de la tête d'usinage 5.

L'organe mécanique 9 est mobile le long de la glissière 10 montée sur la tête d'usinage 5, et peut être fixé à une hauteur donnée au début de l'usinage. Cette hauteur est telle que la distance h séparant l'organe 9 du micro-interrupteur 8 soit inférieure à la distance H séparant la surface de la pièce 4 à usiner du niveau du liquide d'usinage.

L'organe 9 se déplace solidairement avec la tête d'usinage 5.

FIG.2

## DISPOSITIF POUR LIMITER LE RETRAIT DE L'ELECTRODE-OUTIL D'UNE MACHINE D'USINAGE ET SON UTILISATION EN ENFONCAGE PAR ELECTROEROSION

La présente invention à trait à un dispositif interrompant le fonctionnement d'une machine d'enfonçage dès que la zone d'usinage n'est plus immergée dans le liquide d'usinage par suite d'une remontée, en général accidentelle, de l'électrode-outil.

En effet, le liquide d'usinage pour l'enfonçage par électroérosion est en général un hydrocarbure; si la zone d'usinage cesse d'être immergée dans ce liquide par suite d'une remontée excessive de l'électrode-outil, des étincelles éclatent à la surface du liquide, au contact des vapeurs d'hydrocarbure, et risquent de provoquer un incendie en enflammant ce liquide. Une telle remontée accidentelle de l'électrode-outil se produit assez fréquemment dans le cas d'un arc permanent, surtout lorsque l'électrode-outil est en graphite. Il y a formation d'une excroissance de graphite qui peut atteindre quelques centimètres , ce qui a pour effet de faire remonter lentement l'électrode-outil.

On connaît de nombreux dispositifs anti-feu pour machine d'enfonçage EDM, dont la plupart font appel à des systèmes électroniques de détection d'arcs. Ils sont en général agencés, soit pour modifier certains paramètres d'usinage afin d'éliminer les arcs et empêcher ainsi la formation d'un arc permanent, soit pour interrompre l'usinage dans les deux cas suivants :
- le niveau du diélectrique est insuffisant;
- la température du diélectrique est trop élevée.
Certains dispositifs électroniques de l'état de la technique permettent également de détecter un retrait de grande amplitude de l'électrode-outil; d'autres comportent un indicateur de la position de l'électrode-outil; ces divers types de dispositifs électroniques peuvent donc contribuer à une protection anti-feu.

Le dispositif de la présente invention est beaucoup plus simple et meilleur marché que ces dispositifs connus; de plus il peut être très facilement monté sur les machines existantes. A cet effet, il comprend les caractères définis à la revendication 1 : un premier élément monté sur le bâti et un deuxième élément fixé sur la tête d'usinage de façon à se déplacer solidairement avec elle , agencés pour coopérer, cette coopération ayant pour effet de couper le courant d'usinage lorsqu'ils arrivent en regard lors de la remontée de la tête d'usinage . La position verticale de l'un de ces éléments sur la tête d'usinage portant l'électrode-outil ou sur la colonne du bâti de la machine est réglable à une hauteur prédéterminée, l'autre élément étant monté à hauteur fixe. L'un de ces éléments est monté dans un circuit électrique et est apte à couper le courant d'usinage lorsqu'il est actionné par l'autre élément lors de leur coopération. Le dispositif comprend aussi les moyens appropriés pour déplacer et fixer en position l'élément mobile verticalement, ainsi que le circuit électrique comportant l'élément apte à interrompre l'usinage.

Selon la première des variantes de la présente invention, l'un des éléments du dispositif de la présente invention est un organe mécanique monté sur la tête d'usinage de façon à ce que sa position verticale soit réglable à une hauteur prédéterminée. L'autre élément est un micro-interrupteur fixé sur la colonne de la machine d'enfonçage et monté dans un circuit électrique agencé de façon à couper le courant d'usinage lorsque le micro-interrupteur est actionné. L'organe mécanique est profilé de manière à actionner le micro-interrupteur lorsqu'il arrive à la hauteur de ce dernier par suite de la remontée de la tête d'usinage.

Selon une deuxième variante, l'un des éléments est un capteur de position, monté par exemple sur le bâti de la machine, de façon à coopérer avec l'autre élément, qui est une règle électronique montée sur la tête d'usinage. Ce capteur est relié à un compteur qui enregistre les déplacements verticaux de la tête d'usinage. Cet enregistrement peut, par exemple, être réalisé par rapport à une cote verticale de référence, déterminée à partir de la position de la tête d'usinage au départ de l'usinage et en tenant compte de la hauteur du liquide au dessus de la pièce à usiner, (30-40 mm, par exemple). Ce compteur est relié à un système qui envoie un signal interrompant l'usinage dès que la position déterminée par le compteur atteint ou dépasse la valeur de référence.

L'invention sera mieux décrite à l'aide du dessin annexé dans lequel
- la figure 1 schématise les principaux éléments d'une machine d'enfonçage EDM;
- les figures 2 et 3 illustrent l'un des modes de réalisation de la présente invention;
- la figure 4 représente l'une des configurations possibles pour l'élément déplaçable et l'élément fixe du dispositif de la présente invention;
- les figures 5 à 7 illustrent des variantes de l'invention.

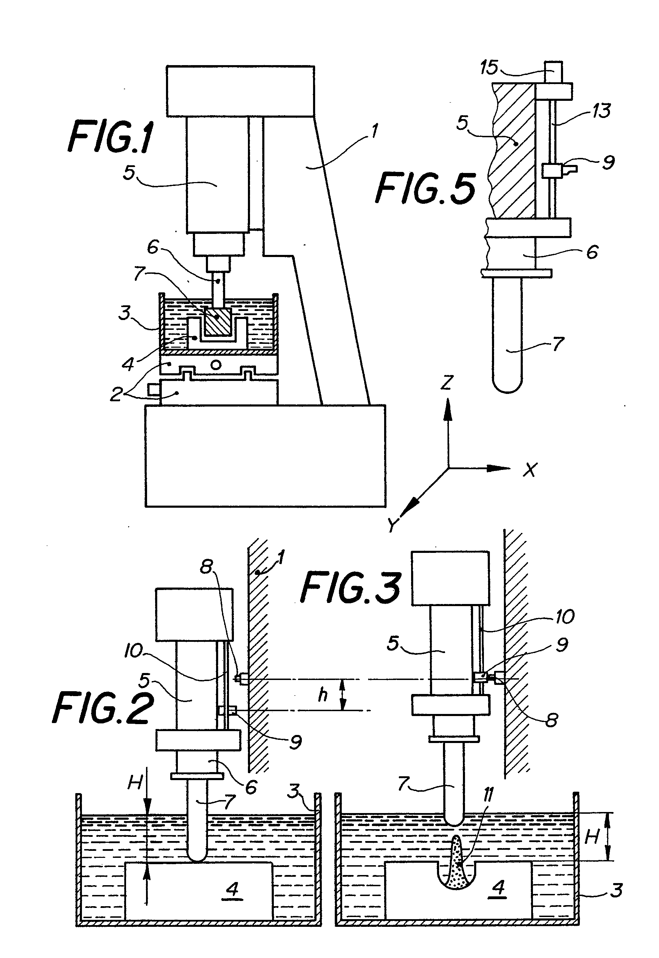

Rappelons brièvement les principaux éléments constituant une machine d'enfonçage EDM, dont certains sont illustrés à la figure 1. Son bâti est en général muni d'une colonne 1 et d'un support pour une table 2 sur laquelle repose un bac 3 rempli de liquide d'usinage. Le bac 3 comporte les moyens (non illustrés) nécessaires pour fixer la pièce 4 à usiner et la maintenir immobile par rapport à lui-même. La colonne 1 porte une tête d'usinage 5, pouvant en général coulisser verticalement au moyen d'un coulisseau motorisé. Cette tête 5 présente un porte-électrode 6 maintenant une électrode-outil 7, ainsi qu'un servomécanisme destiné à commander le déplacement de la tête le long de l'axe vertical Z, afin de faire avancer l'électrode-outil 7 vers et dans l'électrode-pièce 4 afin d'usiner cette dernière. La tête 5 peut aussi comporter les organes nécessaires à la commande de mouvements de l'électrode-outil par rapport à la tête, telle une rotation autour d'un axe vertical.

Le bac 3 est en général animé de mouvements horizontaux grâce à une table 2 à mouvements croisés selon deux axes horizontaux orthogonaux X et Y, sur laquelle il repose. Les mouvements de la table 2 sont obtenus au moyen de moteurs commandés par des circuits (non représentés).

Un générateur (non représenté), agencé pour émettre des impulsions électriques intermittentes, est relié aux électrodes. Des dispositifs de type connu permettent de régler la vitesse à laquelle les électrodes se déplacent l'une par rapport à l'autre, de façon à maintenir une grandeur caractéristique des conditions d'étincelage à une valeur déterminée.

Les figures 2 et 3 illustrent un premier mode d'exécution du dispositif selon la présente invention.

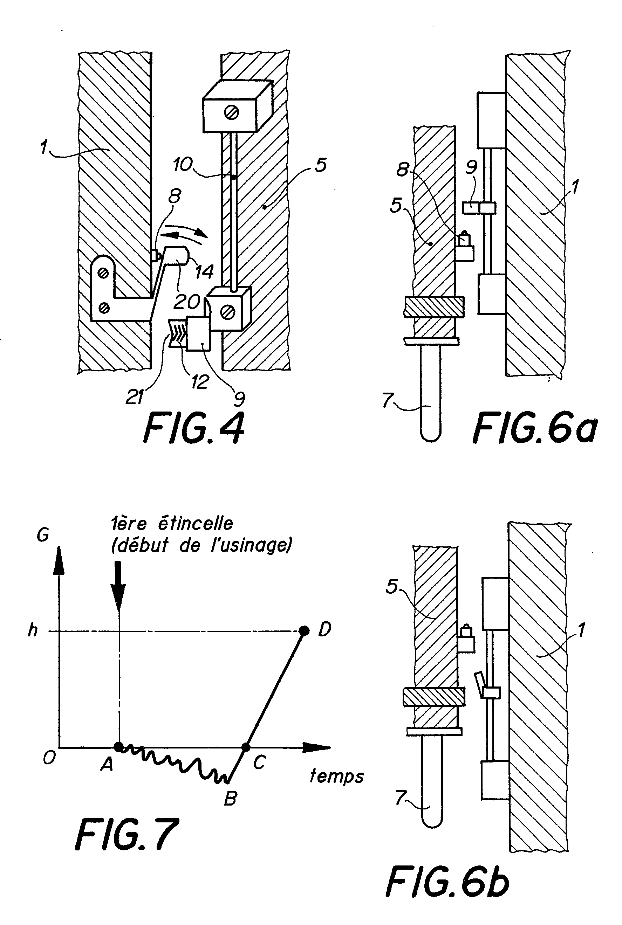

L'élément fixe est un micro-interrupteur 8 monté sur la colonne 1 et faisant partie d'un circuit agencé pour interrompre l'usinage lorsque ce micro-interrupteur est enfoncé. L'organe mécanique 9 actionnant ce dernier est une pièce présentant une excroissance et profilée de manière à enfoncer le micro-interrupteur 8 lorsqu'elle arrive à la hauteur de ce dernier. L'une de ses configurations possibles est schématisée à la figure 4. Cet organe est maintenu sur la tête d'usinage à une hauteur donnée, réglable au début de l'usinage. La pièce 9 coulisse le long d'une tringle verticale 10, fixée le long de la tête d'usinage 5. Cette pièce 9 est déplacée manuellement le long de cette coulisse 10, et est maintenue à la position choisie par l'opérateur sans autre manipulation, simplement par son coefficient de frottement sur la tringle.

C'est le mouvement vertical de la tête d'usinage 5 qui rapproche ou éloigne l'organe mécanique 9 de l'élément fixe 8. Il suffit de positionner l'organe mécanique 9 le long de la tringle 10 de façon qu'il soit face à l'élément fixe 8 lorsque la remontée de l'électrode-outil 7 est telle que son extrémité sur laquelle éclatent les étincelles ne va plus être immergée dans le liquide d'usinage (voir figure 3), par exemple lorsque cette extrémité n'est plus qu'à quelques millimètres de la surface de ce liquide.

Le fonctionnement du dispositif de la présente invention est très simple : au début de l'usinage, l'électrode-outil est amenée à une faible distance de la face supérieure de la pièce à usiner elle-même immergée dans le liquide d'usinage. L'opérateur déplace l'organe mécanique (la pièce 9), le long de la tringle 10 de façon qu'elle se trouve à une distance donnée (h) sous l'élément fixe (le micro-interrupteur 8). Cette distance doit être inférieure à la distance (H) séparant la surface de la pièce 4 à usiner du niveau du liquide d'usinage (figure 2). Dès que le retrait vertical de l'électrode-outil atteint cette valeur h (par suite de l'apparition d'une "chandelle" 11, par exemple), le courant d'usinage est coupé par l'action de la pièce 9 sur le micro-interrupteur 8. L'usinage et le mouvement vers le haut de la tête 5 s'interrompent sans que l'opérateur ait à intervenir. A ce moment, la face usinante de l'électrode-outil est toujours immergée, car h < H.

La valeur de h dépend donc de H et sera donc choisie en fonction du niveau de liquide dans le bac 3, de l'épaisseur de la pièce 4, de la hauteur à laquelle cette dernière est fixée dans le bac.

Cet arrêt de l'usinage peut également déclencher un signal d'alarme alertant l'opérateur, ce signal étant visuel, sonore, etc... , afin qu'il remette l'usinage en route.

L'élément 8 et l'organe 9 peuvent présenter de nombreuses configurations possibles, par exemple celles schématisées à la figure 4 : l'ergot 12 monté sur la pièce 9 coulissant le long de la tringle 10 est profilé de manière à repousser la lamelle ressort 20 contre le micro-interrupteur 8 lorsqu'elle arrive en contact avec lui lors de la remontée de la tête 5. Il présente une sorte de gouttière 21 qui va guider l'extrémité 14 de cette lamelle 20 et la pousser progressivement contre le microinterrupteur 8 lorsque la pièce 9 arrive à la hauteur de ce dernier qui est alors enfoncé. Une telle configuration permet à la tête 5 de remonter en actionnant le micro-interrupteur 8 au passage, ce qui amortit le choc entre les deux éléments, choc qui autrement serait violent, étant donné la masse de la tête 5. En effet, sous l'action de sa force d'inertie, la tête 5 continue son mouvement vers le haut, même après que l'usinage ait été coupé par le microinterrupteur 8. Dés que la gouttière 21 a dépassé la lamelle 20, celle-ci s'écarte du microinterrupteur 8 et reprend sa position initiale.

De nombreuses variantes du mode de réalisation illustré aux figures 2 et 3 sont possibles, sans sortir du cadre de la présente invention. De nombreuses modifications peuvent être réalisées, en particulier en ce qui concerne le mode d'actionnement du micro-interrupteur par l'organe déplaçable, le profil de ce dernier, les moyens pour le déplacer et le fixer en position, etc... Ainsi, la position de référence de la pièce 9 peut être réglée grâce à une vis 13 actionnée par un organe 15 manoeuvré par tout moyen connu, l'ensemble étant monté sur un support fixé à la tête d'usinage (figure 5). La pièce 9 peut aussi se déplacer le long d'un rail fixé sur la tête d'usinage. Elle peut être maintenue en position par tout moyen connu, par exemple en serrant une vis, etc...

Dans l'exemple illustré à la figure 6, le micro-interrupteur 8 est actionnable verticalement, et non plus horizontalement comme aux figures 2 à 5. La pièce 9 est non seulement mobile verticalement mais est pivotable entre la position de travail indiquée à la figure 6, dans laquelle elle peut entrer en contact avec l'élément 8, et une position de repos dans laquelle elle est hors de la trajectoire de l'élément 8. Cet agencement permet la mise en position basse de la tête d'usinage, au début de l'usinage. La pièce 9 peut pivoter par exemple dans un plan horizontal ou bien présenter une articulation qui lui permet d'être relevée verticalement (voir figure 6b). La pièce 9 peut également être par exemple une plaque qu'on peut monter dans l'une de plusieurs positions possibles distribuées verticalement.

L'élément apte à couper le courant d'usinage n'est pas forcément un micro-interrupteur. Il peut s'agir de tout constituant électrique de type connu, ouvrant ou fermant un circuit électrique dès qu'il est soumis à une pression, à un choc, à une excitation lumineuse, à une augmentation de température, etc... L'élément complémentaire apte à l'actionner étant également de type connu.

Il est bien entendu que le mode de réalisation illustré aux figures 2 à 5 et ses variantes ne présentent aucun caractère limitatif.

Selon d'autres variantes, l'organe mécanique à hauteur réglable se déplace le long d'un système fixé à la colonne du bâti de la machine , et c'est l'élément apte à couper le courant d'usinage (le micro-interrupteur) qui est fixé à la tête d'usinage. L'organe mécanique peut également être l'élément fixe (et être fixé soit à la colonne, soit à la tête d'usinage) et l'élément apte à couper le courant être l'élément de hauteur réglable et être fixé en position variable respectivement soit à la tête, soit à la colonne.

Lorsque le réglage de la hauteur de l'organe à hauteur réglable s'accompagne d'une manipulation afin de le maintenir à la hauteur choisie par l'opérateur, un agencement particulier peut être prévu, afin que ce soit cette manipulation qui actionne la mise en route de l'usinage, en fermant un circuit électrique par exemple. Ceci représente une sécurité, l'usinage ne pouvant démarrer lorsque l'opérateur a oublié de régler la hauteur de l'organe à hauteur variable.

Selon un autre mode de réalisation, le dispositif de la présente invention peut également comporter un système permettant de déterminer h automatiquement, en fonction, par exemple, des indications données par un capteur de niveau indiquant la hauteur du liquide d'usinage, et de la position de référence de la surface à usiner. Un tel dispositif peut également présenter les moyens de positionner l'organe à hauteur variable sans l'intervention d'un opérateur.

Dans la deuxième variante mentionnée au début de cette description, selon laquelle le dispositif comporte une règle électronique et un capteur de position relié à un compteur, celui-ci est mis à zéro au début de l'usinage, (voir figure 7), lorsque la tête d'usinage est à faible distance de la surface à usiner. La mise en route du compteur coïncide avec la première étincelle, c'est-à-dire le début de l'usinage. La grandeur G enregistrée par le compteur est représentative des déplacements verticaux de la tête d'usinage. Au départ de l'usinage, $G = 0$ (point A). Puis elle oscille de part et d'autre d'une courbe de pente négative au fur et à mesure de l'avancement de l'usinage, l'électrode-outil pénétrant de plus en plus profondément dans la pièce à usiner. Si par suite de l'établissement d'un arc permanent une "chandelle" devait se former, c'est-à-dire un dépôt de matière entre les deux électrodes de plus en plus important, ce dépôt, en faisant remonter artificiellement la surface à usiner, provoque la remontée de l'électrode-outil, et donc une augmentation rapide et régulière de G (segment BD). L'électrode-outil peut remonter plus haut que sa position de départ (point C), et même dépasser une cote d'alerte (quelques millimètres sous le niveau du diélectrique (point D). Dès que G atteint la valeur h, le système électronique du dispositif est réglé pour envoyer un signal à la commande numérique de la machine afin que celle-ci ordonne la coupure du courant d'usinage.

Selon cette variante, la remise à zéro du compteur se faisant automatiquement en début d'usinage, le dispositif se met en action sans que l'opérateur ait à intervenir, car la valeur de référence h est choisie une fois pour toute, pour autant que la hauteur de diélectrique au-dessus de la surface à usiner soit toujours réglée à la même valeur. La mise en route de l'usinage peut donc se faire sans intervention humaine pour enclancher le dispositif selon la présente invention.

## Revendications

1. Dispositif pour interrompre le fonctionnement d'une machine d'enfonçage dès que la zone d'usinage n'est plus immergée dans le liquide d'usinage par suite d'une remontée de l'électrode-outil , comportant

-a) un premier élément monté sur la colonne du bâti de la machine,

-b) un deuxième élément monté surla tête d'usinage portant l'électrode outil de manière à se déplacer solidairement avec cette tête lors du mouvement vertical de celle-ci,

ce premier élément étant agencé pour coopérer avec le deuxième de façon à couper le courant d'usinage lorsque ce deuxième élément arrive en regard avec lui lors de la remontée de la tête d'usinage, ainsi que

-c) des moyens appropriés pour déplacer et fixer en position l'élément mobile verticalement et

-d) un circuit électrique comportant l'élément apte à interrompre l'usinage,

la position verticale de l'un des deux éléments sur la tête d'usinage ou sur le bâti étant réglable à une hauteur prédéterminée, l'autre élément étant monté à hauteur fixe, et l'un de ces éléments étant monté dans le circuit électrique et étant apte à couper le courant d'usinage lorsqu'il est actionné par l'autre élément lors de leur coopération.

2. Dispositif selon la revendication 1, caractérisé par le fait que l'élément se déplaçant solidairement avec la tête d'usinage est l'élément mobile verticalement.

3. Dispositif selon la revendication 2, caractérisé par le fait que cet élément est un organe mécanique dont la position verticale sur la tête d'usinage est réglable à une hauteur prédéterminée.

4. Dispositif selon la revendication 3, caractérisé par le fait que cet organe présente un doigt profilé de manière à repousser une lamelle faisant ressort fixée sur le bâti de la machine de manière qu'elle vienne appuyer sur un micro-interrupteur interrompant le courant d'usinage.

5. Dispositif selon la revendication 1, caractérisé par le fait que l'élément se déplaçant solidairement avec la tête d'usinage reste fixé à une hauteur donnée sur cette dernière.

6. Dispositif selon la revendication 1, caractérisé par le fait que l'élément apte à couper le courant d'usinage lorsqu'il est actionné par l'autre élément lors de leur coopération est un micro-interrupteur.

7. Dispositif selon la revendication 1, caractérisé par le fait que l'élément apte à couper le courant d'usinage lorsqu'il est actionné par l'autre élément lors de leur coopération est monté sur la colonne de la machine d'enfonçage.

8. Dispositif selon la revendication 1, caractérisé par le fait que l'élément apte à couper le courant d'usinage lorsqu'il est actionné par l'autre élément lors de leur coopération est monté sur la tête d'usinage.

9. Dispositif selon la revendication 1, caractérisé par le fait que l'élément se déplaçant solidairement avec la tête d'usinage est une règle électronique agencée pour coopérer avec un capteur de position monté sur la colonne du bâti de la machine.

10. Dispositif selon la revendication 9, caractérisé par le fait que le capteur est relié à un compteur agencé pour envoyer à la commande numérique de la machine un signal commandant l'arrêt de l'usinage dès que la position de la tête d'usinage atteint ou dépasse une valeur de référence.

11. Dispositif selon la revendication 10, caractérisé par le fait que cette valeur de (référence est inférieure d'au moins quelques millimètres à la distance entre la surface à usiner et le niveau de liquide d'usinage.

12. Dispositif selon la revendication 1, caractérisé par le fait que la hauteur à laquelle est réglé l'élément mobile verticalement est prédéterminée de manière qu'en début d'usinage la distance entre cet élément et l'élément monte à hauteur fixe soit inférieure à la distance entre la surface à usiner et le niveau de liquide d'usinage.

FIG.1

FIG.5

FIG.3

FIG.2

EP 0 368 394 A1

FIG.4

FIG.6a

1ère étincelle
(début de l'usinage)

FIG.7

FIG.6b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | WO-A-8300453 (UNITED TECHNOLOGIES CO) <br> * page 3, ligne 19 - page 4, ligne 11 * <br> --- | 1-3, 6, 7 | B23H7/30 <br> B23H11/00 |
| A | US-A-4039779 (RAYCON CO) <br> * colonne 2, lignes 28 - 45 * <br> * colonne 3, ligne 11 - colonne 4, ligne 25 * <br> --- | 1, 9, 10 | |
| A | PATENT ABSTRACTS OF JAPAN <br> vol. 11, no. 135 (M-585)(2582) 28 avril 1987, <br> & JP-A-61 274822 (MITSUBISCHI ELECTRIC CO) 05 décembre 1986, <br> * le document en entier * <br> ----- | 1, 9, 11, 12 | |

**DOMAINES TECHNIQUES RECHERCHES (Int. Cl.5 )**

B23H

Le présent rapport a été établi pour toutes les revendications

| Lieu de la recherche | Date d'achèvement de la recherche | Examinateur |
|---|---|---|
| LA HAYE | 01 FEVRIER 1990 | DAILLOUX C. |